(19) Europäisches Patentamt / European Patent Office / Office européen des brevets

(11) **EP 4 394 122 A1**

(12) **EUROPEAN PATENT APPLICATION**
published in accordance with Art. 153(4) EPC

(43) Date of publication:
**03.07.2024   Bulletin 2024/27**

(21) Application number: **22861230.5**

(22) Date of filing: **18.08.2022**

(51) International Patent Classification (IPC):
**D06M 13/224** (2006.01)    **D06M 13/11** (2006.01)
**D06M 15/53** (2006.01)    **D06M 101/40** (2006.01)

(52) Cooperative Patent Classification (CPC):
**D06M 13/11; D06M 13/224; D06M 15/53;**
**D06M 15/55**

(86) International application number:
**PCT/JP2022/031164**

(87) International publication number:
**WO 2023/026942 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **24.08.2021   JP 2021136159**

(71) Applicant: **Takemoto Yushi Kabushiki Kaisha**
**Gamagori-shi, Aichi 443-8611 (JP)**

(72) Inventor: **OSHIMA Keiichiro**
**Gamagori-shi, Aichi 443-8611 (JP)**

(74) Representative: **Daub, Thomas**
**Patent- und Rechtsanwaltskanzlei Daub**
**Bahnhofstrasse 5**
**88662 Überlingen (DE)**

(54)   **SIZING AGENT FOR INORGANIC FIBER AND INORGANIC FIBER**

(57)   The present invention addresses the problem of providing a sizing agent for inorganic fibers capable of reducing the fluff of inorganic fibers, and an inorganic fiber. This sizing agent for inorganic fibers is characterized by containing a vinyl ester compound (A), a surfactant (B), and a fatty acid ester (C). This inorganic fiber is characterized in that the sizing agent for inorganic fibers is adhered thereto.

EP 4 394 122 A1

**Description**

TECHNICAL FIELD

The present invention relates to an inorganic fiber sizing agent that reduces fluff of inorganic fibers and to an inorganic fiber.

BACKGROUND ART

Fiber-reinforced resin composite materials are generally known as materials containing inorganic fibers, such as carbon fibers, and a matrix resin, such as a thermosetting resin, which is a base material, and widely used in various fields of, for example, construction materials and transportation equipment. In order to improve adhesiveness of the interface between inorganic fibers, such as carbon fibers, and a base material, such as a thermosetting resin, a process of attaching a sizing agent to the inorganic fibers is performed.

For example, a known inorganic fiber sizing agent is disclosed in Patent Document 1 that is used to reinforce a matrix resin. Patent Document 1 discloses a reinforcing fiber sizing agent containing a vinyl ester compound, water, and an acid-modified polyolefin resin formed by graft copolymerizing a predetermined amount of at least one selected from the group consisting of unsaturated carboxylic acids and acid anhydrides thereof with at least one selected from the group consisting of polypropylenes, ethylene-propylene copolymers, propylene-butene copolymers, and ethylene-propylene-butene copolymers.

CITATION LIST

PATENT LITERATURE

Patent Document 1: Japanese Laid-Open Patent Publication No. 2013-67915

SUMMARY OF INVENTION

TECHNICAL PROBLEM

However, the conventional sizing agent has a problem of being insufficient in an effect of reducing fluff of an inorganic fiber.

SOLUTION TO PROBLEM

The inventor of the present application thus performed research toward solving the above problem and consequently found that an inorganic fiber sizing agent that contains a vinyl ester compound, a surfactant, and a fatty acid ester is very suitable.

To solve the above problem and in accordance with one aspect of the present invention, an inorganic fiber sizing agent contains a vinyl ester compound (A), a surfactant (B), and a fatty acid ester (C).

In the inorganic fiber sizing agent, the fatty acid ester (C) may be an ester compound of a monohydric alcohol with not less than 3 and not more than 24 carbon atoms and a monobasic fatty acid with not less than 4 and not more than 26 carbon atoms.

In the inorganic fiber sizing agent, the fatty acid ester (C) may be an ester compound of a monohydric alcohol with not less than 3 and not more than 10 carbon atoms and a monobasic fatty acid with not less than 8 and not more than 24 carbon atoms.

If the sum of the contents of the vinyl ester compound (A), the surfactant (B), and the fatty acid ester (C) in the inorganic fiber sizing agent is taken as 100 parts by mass, the inorganic fiber sizing agent may contain the fatty acid ester (C) at a ratio of not less than 2 parts by mass and not more than 30 parts by mass.

The inorganic fiber sizing agent may further contain an epoxy compound (D).

In the inorganic fiber sizing agent, the epoxy compound (D) may be a monoepoxy compound.

If the sum of the contents of the vinyl ester compound (A), the surfactant (B), the fatty acid ester (C), and the epoxy compound (D) in the inorganic fiber sizing agent is taken as 100 parts by mass, the inorganic fiber sizing agent may contain the vinyl ester compound (A) at a ratio of not less than 10 parts by mass and not more than 80 parts by mass, the surfactant (B) at a ratio of not less than 5 parts by mass and not more than 60 parts by mass, the fatty acid ester (C) at a ratio of not less than 2 parts by mass and not more than 30 parts by mass, and the epoxy compound (D) at a ratio of not less than 3 parts by mass and not more than 70 parts by mass.

In the inorganic fiber sizing agent, the inorganic fibers may be carbon fibers or glass fibers. That is, the inorganic fiber sizing agent may be for carbon fibers or for glass fibers.

To solve the above problem and in accordance with another aspect of the present invention, an inorganic fiber has the inorganic fiber sizing agent attached thereto.

ADVANTAGEOUS EFFECTS OF INVENTION

The present invention succeeds in reducing fluff of an inorganic fiber.

BRIEF DESCRIPTION OF DRAWINGS

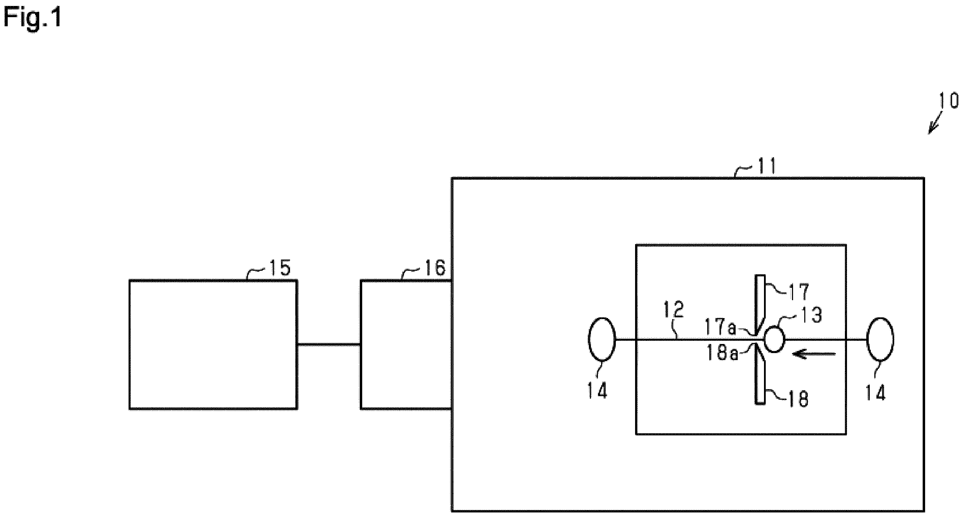

Fig. 1 is a schematic view of a composite material interfacial property evaluation equipment used for adhesiveness evaluations in the Examples section.

DESCRIPTION OF EMBODIMENTS

<First Embodiment>

A first embodiment that specifically embodies an inorganic fiber sizing agent according to the present invention (also referred to hereinafter as sizing agent) will now be described. The sizing agent contains a vinyl ester compound (A), a surfactant (B), and a fatty acid ester (C).

(Vinyl ester compound (A))

The vinyl ester compound (A) improves adhesiveness of inorganic fibers with respect to a base material of a composite material. The vinyl ester compound (A) has a vinyl group, an acrylate group, a methacrylate group, or other highly reactive double bond at a terminal of the compound main chain. The vinyl ester compound (A) may be either an aromatic compound or an aliphatic compound.

Specific examples of the vinyl ester compound (A) include alkyl (meth)acrylic acid esters, alkoxypolyalkylene glycol (meth)acrylic acid esters, benzyl (meth)acrylic acid esters, phenoxyethyl (meth)acrylate, 2-hydroxyalkyl (meth)acrylic acid esters, dialkylaminoethyl (meth)acrylic acid esters, glycidyl (meth)acrylate, 2-methacryloyloxyethyl 2-hydroxypropyl phthalate, polyalkylene glycol di(meth)acrylates, alkanediol di(meth)acrylates, glycerin di(meth)acrylate, 2-hydroxy-3-acryloyloxypropyl (meth)acrylate, dimethylol-tricyclodecane di(meth)acrylate, bisphenol A (meth)acrylic acid ester, alkylene oxide-added bisphenol A (meth)acrylic acid esters, bisphenol A diglycidyl ether (meth)acrylic acid adduct, alkylene oxide-added bisphenol A diglycidyl ether (meth)acrylic acid adduct, trimethylolpropane tri(meth)acrylate, glycidyl (meth)acrylate, phenoxyalkyl (meth)acrylic acid esters, phenoxypolyalkylene glycol (meth)acrylic acid esters, 2-hydroxy-3-phenoxypropanol (meth)acrylic acid ester, polyalkylene glycol nonylphenyl ether (meth)acrylic acid esters, 2-(meth)acryloyloxyethyl succinate, 2-(meth)acryloyloxyethyl phthalate, 2-(meth)acryloyloxyethyl-2-hydroxyethyl phthalate, neopentylglycol (meth)acrylic acid benzoic acid ester, alkylene oxide-added trimethylolpropane tri(meth)acrylates, pentaerythritol tri(meth)acrylic acid ester, pentaerythritol tetra(meth)acrylic acid ester, dipentaerythritol hexa(meth)acrylic acid ester, and pentaerythritol tri(meth)acrylate hexamethylene diisocyanate urethane prepolymer. With these vinyl ester compounds (A), one type of vinyl ester compound may be used alone or two or more types of vinyl ester compounds may be used in combination.

The lower limit of the content of the vinyl ester compound (A) in the sizing agent is preferably not less than 10% by mass and more preferably not less than 15% by mass. When this content is not less than 10% by mass, the adhesiveness of the inorganic fibers with respect to the base material can be improved further. The upper limit of the content of the vinyl ester compound (A) is preferably not more than 80% by mass and more preferably not more than 75% by mass. When this content is not more than 80% by mass, fluff of the inorganic fibers can be reduced further. Any combination of the upper and lower limits described above may be used.

(Surfactant (B))

The surfactant (B) improves a formulation stability of the sizing agent. Examples of the surfactant include an anionic surfactant, a cationic surfactant, a nonionic surfactant, and an amphoteric surfactant. With these surfactants, one type may be used alone or two or more types may be used in combination.

A known nonionic surfactant can be used as appropriate. A compound having a polyoxyalkylene structure with an alkylene oxide added shall be deemed to be included among the surfactants (B) even if it has a fatty acid ester structure. Also, a compound that does not have a polyoxyalkylene structure but has a fatty acid ester structure shall be deemed to be included among fatty acid esters (C) even if it exhibits a surfactant action.

Specific examples of the nonionic surfactant include (1) compounds in which an alkylene oxide with 2 to 4 carbon atoms is added to an organic acid, an organic alcohol, an organic amine, and/or an organic amide, for example, ether type nonionic surfactants, such as polyoxyethylene dilauric acid ester, polyoxyethylene oleic acid ester, polyoxyethylene oleic acid diester, polyoxyethylene octyl ether, polyoxyethylene lauryl ether, polyoxyethylene lauryl ether methyl ether, polyoxyethylene polyoxypropylene lauryl ether, polyoxypropylene lauryl ether methyl ether, polyoxyethylene oleyl ether, polyoxybutylene oleyl ether, polyoxyethylene polyoxypropylene nonyl ether, polyoxypropylene nonyl ether, polyoxyethylene polyoxypropylene octyl ether, ethylene oxide adduct of 2-hexylhexanaol, polyoxyethylene 2-ethyl-1-hexyl ether, polyoxyethylene isononyl ether, polyoxyethylene dodecyl ether, compounds in which ethylene oxide is added to secondary dodecyl alcohol, polyoxyethylene tridecyl ether, polyoxyalkylene tetradecyl ether, polyoxyethylene lauryl aminoether, polyoxyethylene lauramide ether, and polyoxyalkylene tristyrenated phenyl ether, (2) polyoxyalkylene polyhydric alcohol fatty acid ester type nonionic surfactants, such as polyoxyalkylene sorbitan trioleate, polyoxyalkylene coconut oil, polyoxyalkylene castor oil, polyoxyalkylene hydrogenated castor oil, polyoxyalkylene hydrogenated castor oil trioctanoate, and maleic acid ester, stearic acid ester, or oleic acid ester of polyoxyalkylene hydrogenated castor oil, (3) alkyl amide type nonionic surfactants, such as stearic acid diethanolamide and diethanolamine monolauramide, (4) polyoxyalkylene fatty acid amide type nonionic surfactants, such as polyoxyethylene diethanolamine monooleylamide, polyoxyethylene laurylamine, and polyoxyethylene beef tallow amine, and (5) ether ester compounds, such as copolymer of polyoxyethylene, dimethyl phthalate, and lauryl alcohol.

A known anionic surfactant can be used as appropriate. Specific examples of the anionic surfactant include (1) phosphoric acid ester salts of aliphatic alcohols, such as lauryl phosphoric acid ester salts, cetyl phosphoric acid ester salts, octyl phosphoric acid ester salts, oleyl phosphoric acid ester salts, and stearyl phosphoric acid ester salts, (2) phosphoric acid ester salts of adducts of at least one type of alkylene oxide selected from ethylene oxide and propylene oxide with an aliphatic alcohol, such as polyoxyethylene lauryl ether phosphoric acid ester salts, polyoxyethylene oleyl ether phosphoric acid ester salts, and polyoxyethylene stearyl ether phosphoric acid ester salts, (3) aliphatic sulfonic acid salts or aromatic sulfonic acid salts, such as lauryl sulfonic acid salts, myristyl sulfonic acid salts, cetyl sulfonic acid salts, oleyl sulfonic acid salts, stearyl sulfonic acid salts, tetradecane sulfonic acid salts, dodecylbenzene sulfonic acid salts, and secondary alkyl (C13 to C15) sulfonic acid salts, (4) sulfuric acid ester salts of aliphatic alcohols, such as lauryl sulfuric acid ester salts, oleyl sulfuric acid ester salts, and stearyl sulfuric acid ester salts, (5) sulfuric acid ester salts of adducts of at least one type of alkylene oxide selected from ethylene oxide and propylene oxide with an aliphatic alcohol, such as polyoxyethylene lauryl ether sulfuric acid ester salts, polyoxyalkylene (polyoxyethylene, polyoxypropylene) lauryl ether sulfuric acid ester salts, and polyoxyethylene oleyl ether sulfuric acid ester salts, (6) sulfuric acid ester salts of fatty acids, such as castor oil fatty acid sulfuric acid ester salts, sesame oil fatty acid sulfuric acid ester salts, tall oil fatty acid sulfuric acid ester salts, soybean oil fatty acid sulfuric acid ester salts, rapeseed oil fatty acid sulfuric acid ester salts, palm oil fatty acid sulfuric acid ester salts, lard fatty acid sulfuric acid ester salts, beef tallow fatty acid sulfuric acid ester salts, and whale oil fatty acid sulfuric acid ester salts, (7) sulfuric acid ester salts of oils and fats, such as sulfuric acid ester salts of castor oil, sulfuric acid ester salts of sesame oil, sulfuric acid ester salts of tall oil, sulfuric acid ester salts of soybean oil, sulfuric acid ester salts of rapeseed oil, sulfuric acid ester salts of palm oil, sulfuric acid ester salts of lard, sulfuric acid ester salts of beef tallow, and sulfuric acid ester salts of whale oil, (8) fatty acid salts, such as lauric acid salts, oleic acid salts, and stearic acid salts, and (9) sulfosuccinic acid ester salts of aliphatic alcohols, such as dioctyl sulfosuccinic acid salts. Examples of a counterion of the anionic surfactant include a potassium salt, sodium salt, or other alkali metal salt, an ammonium salt, and triethanolamine or other alkanolamine salt.

A known cationic surfactant can be used as appropriate. Specific examples of the cationic surfactant include lauryltrimethylammonium chloride, cetyltrimethylammonium chloride, stearyltrimethylammonium chloride, behenyltrimethylammonium chloride, didecyldimethylammonium chloride, 1,2-dimethylimidazole, and triethanolamine.

A known amphoteric surfactant can be used as appropriate. Specific examples of the amphoteric surfactant include a betaine type amphoteric surfactant.

The lower limit of the content of the surfactant in the sizing agent is preferably not less than 5% by mass and more preferably not less than 10% by mass. When this content is not less than 5% by mass, the formulation stability of the sizing agent can be improved further. The upper limit of the content of the surfactant is preferably not more than 60% by mass and more preferably not more than 55% by mass. When this content is not more than 60% by mass, the reduction of fluff of the inorganic fibers and the adhesiveness of the inorganic fibers with respect to the base material can be improved further. Any combination of the upper and lower limits described above may be used.

(Fatty acid ester (C))

The fatty acid ester (C) reduces the fluff of the inorganic fibers. Examples of the fatty acid ester (C) include an ester compound of an alcohol and a fatty acid. The alcohol to be a raw material of the fatty acid ester (C) may be an aliphatic alcohol that is of a straight chain or has a branched chain or may be an aromatic alcohol. Also, it may be an alcohol having a saturated hydrocarbon group or an alcohol having an unsaturated hydrocarbon group. Also, it may be a monohydric alcohol or may be a polyhydric alcohol that is dihydric or higher. The number of carbon atoms of the alcohol is, for example, not less than 3. The number of carbon atoms of the alcohol is also, for example, not more than 24 or not more than 10.

Specific examples of the monohydric alcohol include (1) straight-chain alkyl alcohols, such as methanol, ethanol, propanol, butanol, pentanol, hexanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol, (2) branched alkyl alcohols, such as isopropanol, isobutanol, isohexanol, 2-ethylhexanol, isononanol, isodecanol, isododecanol, isotridecanol, isotetradecanol, isotriacontanol, isohexadecanol, isoheptadecanol, isooctadecanol, isononadecanol, isoeicosanol, isoheneicosanol, isodocosanol, isotricosanol, isotetracosanol, 2-decyltetradecanol, isopentacosanol, isohexacosanol, isoheptacosanol, isooctacosanol, isononacosanol, and isopentadecanol, (3) straight-chain alkenyl alcohols, such as tetradecenol, hexadecenol, heptadecenol, octadecenol, oleyl alcohol, and nonadecenol, (4) branched alkenyl alcohols, such as isohexadecenol and isooctadecenol, (5) cyclic alkyl alcohols, such as cyclopentanol and cyclohexanol, and (6) aromatic alcohols, such as phenol, nonylphenol, benzyl alcohol, monostyrenated phenol, distyrenated phenol, and tristyrenated phenol.

Specific examples of the polyhydric alcohol include ethylene glycol, propylene glycol, 1,3-propanediol, 1,2-butanediol, 1,3-butanediol, 1,4-butanediol, 2-methyl-1,2-propanediol, 1,5-pentanediol, 1,6-hexanediol, 2,5-hexanediol, 2-methyl-2,4-pentanediol, 2,3-dimethyl-2,3-butanediol, glycerin, 2-methyl-2-hydroxymethyl-1,3-propanediol, trimethylolpropane, sorbitan, pentaerythritol, and sorbitol.

The fatty acid to be a raw material of the fatty acid ester (C) may be an aliphatic fatty acid that is of a straight chain or has a branched chain or may be an aromatic fatty acid. Also, it may be a saturated fatty acid or an unsaturated fatty acid. Also, it may be a monobasic fatty acid or may be a polybasic acid that is dibasic or higher. The number of carbon atoms of the fatty acid is, for example, not less than 4 or not less than 8. The number of carbon atoms of the fatty acid is also, for example, not more than 26 or not more than 24.

Specific examples of the monobasic saturated fatty acid include acetic acid, propionic acid, butyric acid, valeric acid, hexanoic acid (caproic acid), octylic acid (2-ethylhexanoic acid), octanoic acid (caprylic acid), nonanoic acid, decanoic acid (capric acid), dodecanoic acid (lauric acid), tetradecanoic acid (myristic acid), hexadecanoic acid (palmitic acid), octadecanoic acid (stearic acid), eicosanoic acid (arachidic acid), docosanoic acid (behenic acid), tetracosanoic acid, and hexacosanoic acid. Specific examples of the monobasic unsaturated fatty acid include crotonic acid, myristoleic acid, palmitoleic acid, oleic acid, vaccenic acid, eicosenoic acid, linoleic acid, $\alpha$-linolenic acid, $\gamma$-linolenic acid, arachidonic acid, and erucic acid.

Specific examples of the polybasic acid include (1) dibasic acids, such as succinic acid, fumaric acid, maleic acid, adipic acid, and sebacic acid, (2) tribasic acids, such as aconitic acid, (3) aromatic dicarboxylic acids, such as benzoic acid, terephthalic acid, isophthalic acid, and 2,6-naphthalenedicarboxylic acid, (4) aromatic tricarboxylic acids, such as trimellitic acid, and (5) aromatic tetracarboxylic acids, such as pyromellitic acid.

The fatty acid ester (C) is preferably an ester compound of a monohydric alcohol with not less than 3 and not more than 24 carbon atoms and a monobasic fatty acid with not less than 4 and not more than 26 carbon atoms. By such a compound, the effect of reducing the fluff of the inorganic fibers can be improved further.

The fatty acid ester (C) is more preferably an ester compound of a monohydric alcohol with not less than 3 and not more than 10 carbon atoms and a monobasic fatty acid with not less than 8 and not more than 24 carbon atoms. By such a compound, the effect of reducing the fluff of the inorganic fibers can be improved even further.

If the sum of the contents of the vinyl ester compound (A), the surfactant (B), and the fatty acid ester (C) in the sizing agent is taken as 100 parts by mass, the upper limit of the content of the fatty acid ester (C) is preferably not less than 2 parts by mass and more preferably not less than 3 parts by mass. The lower limit of the content of the fatty acid ester (C) is preferably not more than 30 parts by mass and more preferably not more than 25 parts by mass. By specifying to be in such ranges, the fluff of the inorganic fibers can be reduced further. Any combination of the upper and lower limits described above may be used.

(Epoxy compound (D))

The sizing agent may further contain an epoxy compound (D). By containing the epoxy compound (D), the adhesiveness of the inorganic fibers with respect to the base material can be improved. The epoxy compound may be either a monoepoxy compound having one epoxy group in the molecule or a polyfunctional epoxy compound having two or more epoxy groups in the molecule. As the epoxy compound (D), a monoepoxy compound is preferable from a standpoint of further improving the adhesiveness of the inorganic fibers with respect to the base material.

Specific examples of the epoxy compound (D) include amine type epoxy resins, such as polymers of polyoxyalkylene-added p-tert-butylphenol monoglycidyl ether, bisphenol A diglycidyl ether, resorcinol diglycidyl ether, polypropylene glycol diglycidyl ether, trimethylolpropane polyglycidyl ether, pentaerythritol polyglycidyl ether, neopentyl glycol diglycidyl ether, 1 ,6-hexanediol diglycidyl ether, polyethylene glycol diglycidyl ether, polyglycerol polyglycidyl ether, alkyl glycidyl ether, polyoxyalkylene-added alkyl glycidyl ether, phenyl glycidyl ether, polyoxyalkylene-added phenyl glycidyl ether, triglycidylamine, and tetraglycidylamine. Specific examples of the polyoxyalkylene-added alkyl glycidyl ether include polyoxyalkylene-added lauryl alcohol monoglycidyl ether.

An epoxy equivalent of the epoxy compound (D) is not limited in particular and, for example, is preferably 50 to 1000.

If the sum of the contents of the vinyl ester compound (A), the surfactant (B), the fatty acid ester (C), and the epoxy compound (D) in the sizing agent is taken as 100 parts by mass, the sizing agent preferably contains the vinyl ester compound (A) at a ratio of not less than 10 parts by mass and not more than 80 parts by mass, the surfactant (B) at a ratio of not less than 5 parts by mass and not more than 60 parts by mass, the fatty acid ester (C) at a ratio of not less than 2 parts by mass and not more than 30 parts by mass, and the epoxy compound (D) at a ratio of not less than 3 parts by mass and not more than 70 parts by mass. By specifying to be in such ranges, the adhesiveness of the inorganic fibers with respect to the base material can be improved further while reducing the fluff of the inorganic fibers.

<Second Embodiment>

Next, a second embodiment that specifically embodies an inorganic fiber according to the present invention will be described. The same as the first embodiment applies to the second embodiment except for the matters described below. In other words, the description of the same features as in the first embodiment will be omitted in the following description of the second embodiment.

The inorganic fiber of the present embodiment has the sizing agent of the first embodiment attached to its surface. The method for producing the inorganic fiber includes attaching the sizing agent of the first embodiment to an inorganic fiber. There is no particular restriction on the amount of the sizing agent attached (not including solvent), and it is preferable that the sizing agent is attached to the inorganic fiber in an amount of not less than 0.01% by mass and not more than 10% by mass. By specifying to be in such numerical value range, the effect such as a bundling property of the inorganic fiber can be improved further.

(Inorganic Fiber)

The type of the inorganic fiber used in the present embodiment is not particularly limited, and examples thereof include glass fibers, carbon fibers, ceramic fibers, metal fibers, mineral fibers, rock fibers, and slag fibers. Among these, glass fibers and carbon fibers are preferable from a standpoint that the effects of the present invention can be expressed more effectively. Examples of the types of the carbon fibers include PAN-based carbon fibers obtained using acrylic fibers as raw material, pitch-based carbon fibers obtained using pitch as raw material, recycled carbon fibers, and carbon fibers obtained using, for example, polyester fibers, polyethylene resin, phenol resin, cellulose resin, or lignin resin as raw material.

In order to attach the sizing agent of the first embodiment to the inorganic fiber, a method that is generally used industrially can be used. Example thereof include a roller immersion method, a roller contact method, a spraying method, and a papermaking method. The inorganic fiber to which the sizing agent has been attached may subsequently be dried using a known method.

<Third Embodiment>

Next, a third embodiment that specifically embodies a composite material according to the present invention will be described. The same as the first and second embodiments applies to the third embodiment except for the matters described below. In other words, the description of the same features as in the first embodiment or the second embodiment will be omitted in the following description of the third embodiment.

The composite material is obtained by impregnating the inorganic fiber, to which the sizing agent has been attached according to the second embodiment, with a matrix resin as a base material. There is no particular restriction on the form of the inorganic fiber when producing the composite material, and examples thereof include a long fiber form, short fiber form, and nonwoven fabric form.

(Matrix Resin)

The matrix resin is selected appropriately from those that are known in accordance with, for example, the purpose or application of the composite material. Specific examples of the matrix resin include epoxy resins, vinyl ester resins, polyamide resins, polyolefin resins, polyurethane resins, polycarbonate resins, polyester resins, PEEK resins, fluororesins, phenoxy resins, phenol resins, BMI resins, polyimide resins, polyimide resin precursors, and polyether sulfone resins. Among these, thermosetting resins are preferable from the standpoint that the adhesive characteristics can be expressed more effectively.

By the sizing agent, the inorganic fiber, and the composite material of the embodiments described above, the effects such as the following can be obtained.

(1) With the sizing agent and the inorganic fiber of the embodiments described above, fluff of fiber surfaces can be reduced. Thereby, winding of fibers around a roller is reduced, for example, and production efficiency of fibers can be improved.

(2) With the composite material of the embodiment described above, the sizing agent of the first embodiment is attached to the inorganic fibers. Therefore, by the excellent adhesiveness of the inorganic fibers and the matrix resin, a fiber-reinforced resin composite material that is excellent in various characteristics and especially in mechanical characteristics can be obtained.

The above-described embodiments may be modified as follows. The above-described embodiments and the following modifications can be implemented in combination with each other to the extent that they are technically consistent.

· The sizing agent of the above-described embodiments does not preclude blending of, for example, water or an organic solvent, a smoothing agent, an antioxidant, or a preservative as other ingredients within a range that does not impair the effects of the present invention from a standpoint of maintaining the performance of the sizing agent and a standpoint of improving application property with respect to an inorganic fiber.

· The field to which the sizing agent of the above-described embodiments is applied is not particularly limited. For example, it may be applied to a carbon fiber composite material (CFRP) in which carbon fibers are impregnated with a matrix resin such as a vinyl ester resin, as well as to reinforcing fibers for concrete.

EXAMPLES

Examples will now be given below to describe the features and the effects of the present invention more specifically, but the present invention is not restricted to these examples. In the following description of working examples and comparative examples, parts means parts by mass and % means % by mass.

Experimental Part 1 (Preparation of fatty acid ester)

· Synthesis of fatty acid ester (C-1)

256 g (1 mole) of palmitic acid as the fatty acid and 144 g (1 mole) of 1-nonanol were charged into a flask and after melting at 75°C under nitrogen gas, 0.6 g of paratoluenesulfonic acid were added as a catalyst and a reaction was made to occur at 120°C under a reduced pressure of 2 mmHg for 4 hours. Return to ordinary pressure at 105°C was then performed under nitrogen gas and an adsorbent was added to treat the catalyst. Filtration was then performed at 90°C to obtain a mixture containing a fatty acid ester (C-1).

· Synthesis of fatty acid esters (C-2) to (C-10)

Fatty acid esters (C-2) to (C-10) were prepared using respective ingredients shown in Table 1 and in accordance with the same method as the fatty acid ester (C-1).

The types of alcohols and the types of fatty acids that are the raw materials of the fatty acid esters thus prepared are respectively indicated in the "Alcohol" column and the "Carboxylic acid" column of Table 1.

Experimental Part 2 (Preparation of sizing agent)

· Sizing agent of Example 1

By mixing, as raw materials shown in Table 1, 40 parts (%) of bisphenol-A diglycidyl ether methacrylic acid adduct (A-1) as the vinyl ester compound, 20 parts (%) of 31 mole ethylene oxide/4 mole propylene oxide adduct of tristyrenated phenol (B-1) as the surfactant, 10 parts (%) of the fatty acid ester (C-1), and 30 parts (%) of 30 mole polyoxyethylene oxide adduct of lauryl alcohol monoglycidyl ether (D-1) as the epoxy compound, a sizing agent of Example 1 having the content ratio shown in Table 2 was obtained.

· Sizing agents of Examples 2 to 23 and Comparative Examples 1 to 4

Respective sizing agents of Examples 2 to 23 and Comparative Examples 1 to 4 were prepared by using, as raw materials, the vinyl ester compounds (A), the surfactants (B), and the fatty acid esters (C) of Table 1 as well as the epoxy compounds (D) and other compound (E) as necessary and mixing them at the content ratio indicated in Table 2.
The type and content of each vinyl ester compound (A), the type and content of each surfactant (B), the type and content of each fatty acid ester (C), the type and content of each epoxy compound (D), and the type and content of the other compound (E) that are contained in the sizing agents thus prepared are respectively indicated in the "Vinyl ester compound (A)" column, the "Surfactant (B)" column, the "Fatty acid ester (C)" column, the "Epoxy compound (D)" column, and the "Other compound (E)" column of Table 2.

[Table 1]

| Fatty acid ester (C) | Alcohol | Carboxylic acid |
|---|---|---|
| C-1 | 1-nonanol | Palmitic acid |
| C-2 | 2-ethylhexyl alcohol | Lauric acid |
| C-3 | 1-butanol | Stearic acid |
| C-4 | 2-ethylhexyl alcohol | Myristic acid |
| C-5 | 1-hexanol | Oleic acid |
| C-6 | Isotridecyl alcohol | Lauric acid |
| C-7 | Oleyl alcohol | Oleic acid |
| C-8 | 2-decyltetradecanol | Hexanoic acid |
| C-9 | Lauryl alcohol | Erucic acid |
| C-10 | Trimethylolpropane | Lauric acid |

[Table 2]

| Category | Vinyl ester compound (A) | | Surfactant (B) | | Fatty acid ester (C) | | Epoxy compound (D) | | Other compound (E) | | Evaluation | |
|---|---|---|---|---|---|---|---|---|---|---|---|---|
| | Type | Parts by mass | Type | Parts by mass | Type | Parts by mass | Type | Parts by mass | Type | Parts by mass | Fluff | Adhesiveness |
| Example 1 | A-1 | 40 | B-1 | 20 | C-1 | 10 | D-1 | 30 | - | - | ◎◎ | ◎◎ |
| Example 2 | A-1 | 47 | B-1 | 20 | C-1 | 3 | D-1 | 30 | - | - | ◎◎ | ◎◎ |
| Example 3 | A-1 | 40 | B-1 | 20 | C-1 | 22 | D-1 | 18 | - | - | ◎◎ | ◎◎ |
| Example 4 | A-1 | 70 | B-1 | 20 | C-1 | 5 | D-1 | 5 | - | - | ◎◎ | ◎◎ |
| Example 5 | A-1 | 15 | B-1 | 20 | C-1 | 5 | D-1 | 60 | - | - | ◎◎ | ◎◎ |
| Example 6 | A-1 | 45 | B-1 | 10 | C-1 | 5 | D-1 | 40 | - | - | ◎◎ | ◎◎ |
| Example 7 | A-1 | 25 | B-1 | 50 | C-1 | 5 | D-1 | 20 | - | - | ◎◎ | ◎◎ |
| Example 8 | A-1 | 35 | B-1 | 25 | C-2 | 10 | D-1 | 30 | - | - | ◎◎ | ◎◎ |
| Example 9 | A-1 | 40 | B-1 | 25 | C-3 | 5 | D-1 | 30 | - | - | ◎◎ | ◎◎ |
| Example 10 | A-1 | 40 | B-1 | 20 | C-4 | 10 | D-1 | 30 | - | - | ◎◎ | ◎◎ |
| Example 11 | A-1 | 40 | B-1 | 25 | C-5 | 5 | D-1 | 30 | - | - | ◎◎ | ◎◎ |
| Example 12 | A-2 | 40 | B-1 | 25 | C-1 | 5 | D-1 | 30 | - | - | ◎◎ | ◎◎ |
| Example 13 | A-3 | 40 | B-2 | 25 | C-1 | 5 | D-1 | 30 | - | - | ◎◎ | ◎◎ |
| Example 14 | A-1 | 40 | B-1 | 25 | C-1 | 5 | D-2 | 30 | - | - | ◎◎ | ◎◎ |
| Example 15 | A-1 | 40 | B-1 | 25 | C-1 | 5 | D-3 | 30 | - | - | ◎◎ | ◎ |
| Example 16 | A-1 | 70 | B-1 | 20 | C-1 | 10 | - | - | - | - | ◎◎ | ○ |
| Example 17 | A-1 | 40 | B-1 | 25 | C-6 | 5 | D-1 | 30 | - | - | ◎ | ◎◎ |
| Example 18 | A-1 | 40 | B-1 | 25 | C-7 | 5 | D-1 | 30 | - | - | ◎ | ◎◎ |
| Example 19 | A-1 | 70 | B-1 | 20 | C-8 | 10 | - | - | - | - | ◎ | ○ |
| Example 20 | A-1 | 70 | B-1 | 20 | C-9 | 10 | - | - | - | - | ◎ | ○ |
| Example 21 | A-1 | 79 | B-1 | 20 | C-1 | 1 | - | - | - | - | ◎ | ○ |
| Example 22 | A-1 | 79 | B-1 | 20 | C-8 | 1 | - | - | - | - | ○ | ○ |
| Example 23 | A-1 | 70 | B-1 | 20 | C-10 | 10 | - | - | - | - | ○ | ○ |

(continued)

| Category | Vinyl ester compound (A) | | Surfactant (B) | | Fatty acid ester (C) | | Epoxy compound (D) | | Other compound (E) | | Evaluation | |
|---|---|---|---|---|---|---|---|---|---|---|---|---|
| | Type | Parts by mass | Type | Parts by mass | Type | Parts by mass | Type | Parts by mass | Type | Parts by mass | Fluff | Adhesiveness |
| Comparative example 1 | A-1 | 80 | B-1 | 20 | | | | - - - | - - | - | × | ○ |
| Comparative example 2 | A-1 | 24 | B-3 | 6 | - | - | - | - | E-1 | 70 | × | ○ |
| Comparative example 3 | - | - | B-1 | 20 | - | - | D-3 | 80 | - | - | × | × |
| Comparative example 4 | - | - | B-1 | 100 | - | - | - | - | - | - | × | × |

Details of the vinyl ester compounds (A), the surfactants (B), the epoxy compounds (D), and the other compound (E) shown in Table 2 are as follows.

(Vinyl ester compounds (A))

A-1: bisphenol-A diglycidyl ether methacrylic acid adduct
A-2: 2 mole ethylene oxide-added bisphenol-A acrylic acid adduct
A-3: 2-acryloyloxyethyl-2-hydroxyethyl-phthalic acid

(Surfactants (B))

B-1: 31 mole ethylene oxide/4 mole propylene oxide adduct of tristyrenated phenol
B-2: 60 mole ethylene oxide adduct of hydrogenated castor oil

(Epoxy compounds (D))

D-1: 30 mole polyoxyethylene-added lauryl alcohol monoglycidyl ether
D-2: 20 mole polyoxyethylene-added p-tert-butylphenol monoglycidyl ether
D-3: bisphenol-A diglycidyl ether (epoxy equivalent: 184 to 194)

(Other compound (E))

E-1: acid-modified polypropylene resin (main chain = propylene resin, graft amount = 5% by mass, MW = 4500)

Experimental Part 2 (Evaluation)

(Fluff)

The sizing agent of each example prepared as described above was diluted with water to prepare an aqueous solution with a solids content of 2%. The aqueous solution was supplied by an immersion method such as to apply 2% as solids content to carbon fibers of strand form to prepare strand carbon fibers applied with the sizing agent of each example.

Next, five chrome-plated stainless steel rods of 2 mm diameter were disposed in zigzag arrangement at intervals of 15 mm such that the obtained carbon fiber bundle would contactingly pass along the surfaces of the stainless steel rods at a contact angle of 120°. The carbon fiber bundle was set in zigzag arrangement between the stainless steel rods and a tension of 1 kg weight was applied. Immediately before a wind-up roll, the carbon fiber bundle was sandwiched by two sheets of urethane foam of 10 cm $\times$ 10 cm with a load of 1 kg weight applied thereto and rubbed for 5 minutes at a speed of 1 m/minute. The mass of fluff that became attached to the sponge during this time was measured and the degree of occurrence of fluff was evaluated based on criteria indicated below. The results of evaluation are indicated in the "Fluff" column of Table 2.

· Evaluation criteria of fluff

◎◎ (excellent): Less than 0.10 mg/m.
◎ (satisfactory): Not less than 0.1 mg/m but less than 0.15 mg/m.
○ (fair): Not less than 0.15 mg/m but less than 0.20 mg/m.
$\times$ (poor): Not less than 0.20 mg/m.

(Adhesiveness)

The adhesiveness was evaluated by way of stress measured by a micro droplet method using a commercially available composite material interfacial property evaluation equipment. Fig. 1 shows a schematic view of a composite material interfacial property evaluation equipment 10.

A single carbon fiber was taken out from the carbon fibers prepared for the evaluation and both ends of the carbon fiber 12 in a tensioned state were fixed with an adhesive 14 to a holder 11 of plate-like quadrilateral frame shape. Next, a matrix resin prepared with a ratio of vinyl ester resin (tradename: RIPOXY R804 produced by Showa Denko K. K.)/curing agent (tradename: PERCUMYL D produced by NOF CORPORATION) = 100/1.5 (mass ratio) was attached to the carbon fiber 12 such as to be a resin droplet 13 with a diameter of approximately 100 μm and fixed by heating for 15 minutes under an atmosphere of 150°C.

In an unillustrated equipment main body, two plate-shaped blades 17 and 18, with each of which a vertical cross section at one side surface has been formed to a tapered shape, are mounted with tip portions 17a and 18a thereof facing each other.

The holder 11 was mounted to a base plate 16, fixed to the equipment main body, at a position at which the carbon fiber 12 with the resin droplet 13 fixed thereto is sandwiched by the tip portions 17a and 18a of the two blades 17 and 18. A load cell 15 is connected to the base plate 16 and a stress loaded onto the base plate 16 is measured.

A maximum stress F was measured by the load cell 15 that arises when the resin droplet 13 is peeled off from the carbon fiber 12 by the tip portions 17a and 18a of the blades 17 and 18 as the holder 11 is moved in a fiber axis direction at a speed of 5 mm/minute.

Using the measured value, an interfacial shear strength τ was calculated by the following numerical formula 1. The same operation was performed 20 times and an average value of the obtained interfacial shear strength was determined. Using the average value, the adhesiveness was evaluated based on criteria indicated below. The results of evaluation are indicated in the "Adhesiveness" column of Table 2.

[Numerical Formula 1]

$$\tau = F/\pi DL$$

In the numerical formula 1,

F represents the maximum stress (N) that arises when the resin droplet 13 peels off from the carbon fiber 12,
D represents the diameter (m) of the carbon fiber 12, and
L represents the diameter (m) in an extraction direction of the resin droplet 13.

· Evaluation criteria of adhesiveness

◎◎ (excellent): The interfacial shear strength is not less than 50 MPa.
◎ (satisfactory): The interfacial shear strength is not less than 45 MPa but less than 50 MPa.
○ (fair): The interfacial shear strength is not less than 40 MPa but less than 45 MPa.
✕ (poor): The interfacial shear strength is less than 40 MPa.

As is clear from the results shown in Table 2, the sizing agents of the respective Examples were evaluated to be fair or better in terms of both fluff and adhesiveness. By the present invention, the effects of reduction of fluff and improvement of adhesiveness are provided. In addition, it has been confirmed that, as with carbon fibers, the effects of reduction of fluff and improvement of adhesiveness are provided with glass fibers as well.

REFERENCE SIGNS LIST

10      composite material interfacial property evaluation equipment
11      holder
12      carbon fiber
13      resin droplet
14      adhesive agent

| 15 | load cell |
| 16 | substrate |
| 17, 18 | blade |

**Claims**

1. An inorganic fiber sizing agent for inorganic fibers, comprising a vinyl ester compound (A), a surfactant (B), and a fatty acid ester (C).

2. The inorganic fiber sizing agent according to claim 1, wherein the fatty acid ester (C) is an ester compound of a monohydric alcohol with not less than 3 and not more than 24 carbon atoms and a monobasic fatty acid with not less than 4 and not more than 26 carbon atoms.

3. The inorganic fiber sizing agent according to claim 1 or 2, wherein the fatty acid ester (C) is an ester compound of a monohydric alcohol with not less than 3 and not more than 10 carbon atoms and a monobasic fatty acid with not less than 8 and not more than 24 carbon atoms.

4. The inorganic fiber sizing agent according to any one of claims 1 to 3, wherein if the sum of the contents of the vinyl ester compound (A), the surfactant (B), and the fatty acid ester (C) in the inorganic fiber sizing agent is taken as 100 parts by mass, the inorganic fiber sizing agent contains the fatty acid ester (C) at a ratio of not less than 2 parts by mass and not more than 30 parts by mass.

5. The inorganic fiber sizing agent according to any one of claims 1 to 4, further comprising an epoxy compound (D).

6. The inorganic fiber sizing agent according to claim 5, wherein the epoxy compound (D) is a monoepoxy compound.

7. The inorganic fiber sizing agent according to claim 5 or 6, wherein if the sum of the contents of the vinyl ester compound (A), the surfactant (B), the fatty acid ester (C), and the epoxy compound (D) in the inorganic fiber sizing agent is taken as 100 parts by mass, the inorganic fiber sizing agent contains the vinyl ester compound (A) at a ratio of not less than 10 parts by mass and not more than 80 parts by mass, the surfactant (B) at a ratio of not less than 5 parts by mass and not more than 60 parts by mass, the fatty acid ester (C) at a ratio of not less than 2 parts by mass and not more than 30 parts by mass, and the epoxy compound (D) at a ratio of not less than 3 parts by mass and not more than 70 parts by mass.

8. The inorganic fiber sizing agent according to any one of claims 1 to 7, wherein the inorganic fibers are carbon fibers or glass fibers.

9. An inorganic fiber having the inorganic fiber sizing agent according to any one of claims 1 to 8 attached thereto.

EP 4 394 122 A1

## Fig.1

| INTERNATIONAL SEARCH REPORT | | International application No. |
|---|---|---|
| | | **PCT/JP2022/031164** |

**A.   CLASSIFICATION OF SUBJECT MATTER**

*D06M 13/224*(2006.01)i; *D06M 13/11*(2006.01)i; *D06M 15/53*(2006.01)i; *D06M 101/40*(2006.01)n
FI:    D06M13/224; D06M13/11; D06M15/53; D06M101:40

According to International Patent Classification (IPC) or to both national classification and IPC

**B.   FIELDS SEARCHED**

Minimum documentation searched (classification system followed by classification symbols)

D06M13/00-15/715; B29B11/16; B29B15/08-15/14; C08J5/04-5/10; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | WO 2013/146024 A1 (MATSUMOTO YUSHI-SEIYAKU CO., LTD.) 03 October 2013 (2013-10-03)<br>    claims | 1, 2, 4-9 |
| A | | 3 |
| Y | JP 63-105174 A (TOA NENRYO KOGYO KK) 10 May 1988 (1988-05-10)<br>    claims, p. 3, lower left column, lines 16-20 | 1, 2, 4-9 |
| A | | 3 |
| Y | JP 63-59477 A (TOA NENRYO KOGYO KK) 15 March 1988 (1988-03-15)<br>    claims, p. 2, lower left column, line 2 to lower right column, line 4, p. 3, upper right column, lines 8-12 | 1, 2, 4-9 |
| A | | 3 |
| Y | JP 2011-21281 A (MATSUMOTO YUSHI-SEIYAKU CO., LTD.) 03 February 2011 (2011-02-03)<br>    claims | 5-7 |
| A | | 3 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT Information on patent family members | | International application No. PCT/JP2022/031164 |
|---|---|---|

| Patent document cited in search report | Publication date (day/month/year) | Patent family member(s) | Publication date (day/month/year) |
|---|---|---|---|
| WO 2013/146024 A1 | 03 October 2013 | US 2015/0018451 A1 claims<br>CN 104204341 A<br>KR 10-2014-0139105 A | |
| JP 63-105174 A | 10 May 1988 | (Family: none) | |
| JP 63-59477 A | 15 March 1988 | (Family: none) | |
| JP 2011-21281 A | 03 February 2011 | (Family: none) | |

Form PCT/ISA/210 (patent family annex) (January 2015)

**REFERENCES CITED IN THE DESCRIPTION**

**Patent documents cited in the description**

- JP 2013067915 A